# EUROPEAN PATENT APPLICATION

(11) **EP 4 628 318 A1**
(43) Date of publication of application: **08.10.2025**
(21) Application number: 25167348.9
(22) Date of filing: 31.03.2025
(51) Int. Cl.: B41M 5/00, B41M 3/00, B41M 7/00

(54) **IMAGE FORMING METHOD AND LIQUID FOR USE THEREIN**

(30) Priority: 01.04.2024 JP 2024058766
(71) Applicant: BROTHER KOGYO KABUSHIKI KAISHA, Aichi-ken 467-8561 (JP)
(72) Inventor: NISHIURA, Miki, Nagoya, 467-8562 (JP)
(74) Representative: Kuhnen & Wacker Patent- und Rechtsanwaltsbüro PartG mbB

(57) **Abstract**

An image forming method may comprise: feeding a medium (2) including a heat-sensitive layer (L) and a coat layer (M) on the heat-sensitive layer (L), in which the heat-sensitive layer (L) may comprise a color developer (P) and a leuco dye (Q) which reacts with the developer at a first temperature, and the coat layer (M) may comprise a polymer; applying liquid onto the coat layer (M) of the medium, in which the liquid may comprises first and second organic solvents; and drying the medium at a second temperature lower than the first temperature. A solubility parameter of the leuco dye may be 8.0 or more and 9.0 or less. A solubility parameter of the polymer may be 11.0 or less. A solubility parameter of the first organic solvent may be 12.0 or more and 20.0 or less. A solubility parameter of the second organic solvent may be 9.0 or more and less than 12.0. A content of the first organic solvent to a total liquid amount may be higher than that of the second organic solvent to the total liquid amount. A sum of the content of the first organic solvent to the total liquid amount and the content of the second organic solvent to the total liquid amount may be less than 25 weight %.

## Description

### TECHNICAL FIELD

The disclosure herein describes technology relating to an image forming method of forming an image on a medium comprising a heat-sensitive layer, and a liquid for use therein.

### BACKGROUND ART

JP Patent Application Publication No. 2000-25331 describes an image forming method of forming an image on a heat-sensitive paper. The heat-sensitive paper is known to exhibit discoloration when liquid(s) ejected onto the heat-sensitive paper penetrate into the paper.

### DESCRIPTION

The description herein discloses a novel technique that can suppress discoloration of a medium having a heat-sensitive layer when an image is formed by applying liquid(s) on the medium.

The description herein discloses an image forming method. This image forming method may comprise: a feeding process of feeding a medium comprising a heat-sensitive layer and a coat layer on the heat-sensitive layer, wherein the heat-sensitive layer comprises a color developer and a leuco dye configured to react with the color developer at a first temperature, and the coat layer comprises a polymer; an applying process of applying a liquid onto the coat layer of the medium being fed, wherein the liquid comprises a first organic solvent and a second organic solvent; and a drying process of drying the medium with the liquid applied thereon at a second temperature which is lower than the first temperature. A solubility parameter of the leuco dye may be 8.0 or more and 9.0 or less. A solubility parameter of the polymer may be 11.0 or less. A solubility parameter of the first organic solvent may be 12.0 or more and 20.0 or less. A solubility parameter of the second organic solvent may be 9.0 or more and less than 12.0. A content of the first organic solvent to a total amount of the liquid may be higher than a content of the second organic solvent to the total amount of the liquid. A sum of the content of the first organic solvent to the total amount of the liquid and the content of the second organic solvent to the total amount of the liquid may be less than 25 weight %.

According to the above configuration, the solubility parameter of the second organic solvent in the liquid has a value close to the solubility parameter of the polymer in the coat layer. Due to this, the liquid applied to the coat layer can easily penetrate into the coat layer by the effect of the second organic solvent. As a result, the liquid on the coat layer can be suitably dried even when the medium is dried at a relatively low second temperature. This can suppress the discoloration of the medium due to the reaction between the color developer and the leuco dye caused by the application of heat in the drying process.

On the other hand, the solubility parameter of the second organic solvent is at a value close to the solubility parameter of the leuco dye also. When the values of these solubility parameters are close, the leuco dye can dissolve in the liquid. It is known that when the leuco dye dissolves in the liquid, the color developer and the leuco dye react and the medium undergoes discoloration. However, according to the above configuration, the liquid comprises the first organic solvent having the solubility parameter significantly different from the solubility parameter of the leuco dye, and the content of the first organic solvent is greater than that of the second organic solvent. Due to this, the leuco dye can be suppressed from dissolving in the liquid by the effect of the first organic solvent. For this reason, it is also possible to suppress discoloration of the medium due to the reaction between the color developer and the leuco dye caused by the dissolution of the leuco dye in the liquid.

Time from completion of the applying process to start of the drying process may be 10 seconds or less.

A ratio of the content of the second organic solvent to the content of the first organic solvent may be 0.2 or less.

A weighted average of the solubility parameter of the first organic solvent and the solubility parameter of the second organic solvent may be 15.1 or more.

The liquid further may comprise resin particles.

The liquid further may comprise a color material.

A ratio of the content of the second organic solvent to a content of the resin particles may be 0.4 or more.

The drying process may comprise feeding a gas having the second temperature.

The second temperature may be more than or equal to a temperature obtained by subtracting 30 °C from a minimum film forming temperature of the resin particles.

The image forming method further may comprise a heating process of selectively heating the medium at the first temperature or higher after the drying process.

Each of a vapor pressure of the first organic solvent and a vapor pressure of the second organic solvent may be smaller than a vapor pressure of water.

A liquid used to form an image on a medium by the above image forming method is also novel and useful. The medium may comprise a heat-sensitive layer and a coat layer on the heat-sensitive layer. The heat-sensitive layer may comprise a color developer and a leuco dye configured to react with the color developer at a first temperature. The coat layer may comprise a polymer. The liquid may comprise a first organic solvent and a second organic solvent. A solubility parameter of the leuco dye may be 8.0 or more and 9.0 or less. A solubility parameter of the polymer may be 11.0 or less. A solubility parameter of the first organic solvent may be 12.0 or more and 20.0 or less. A solubility parameter of the second organic solvent may be 9.0 or more and less than 12.0. A content of the first organic solvent to a total amount of the liquid may be higher than a content of the second organic solvent to the total amount of the liquid. A sum of the content of the first organic solvent to the total amount of the liquid and the content of the second organic solvent to the total amount of the liquid may be less than 25 weight %.

UV ink is often employed when printing an image on a heat-sensitive paper using an inkjet method. However, there is a problem that a polymerization initiator contained in the UV ink generates odor when the UV ink is not cured sufficiently. To avoid this problem, the inventor of the art disclosed herein considered printing an image on a heat-sensitive paper using water-based ink instead of UV ink. However, since a main solvent of such water-based ink is water, a coat layer (so-called protective layer) on a surface of the heat-sensitive paper is hydrophobic, thus it takes relatively a long time for the ink to penetrate into the heat-sensitive paper. That is, a relatively long time is required for ink applied on the surface of the heat-sensitive paper to dry. As such, after the water-based ink has been applied to the surface of the heat-sensitive paper, there is a risk that the ink may adhere to a feeding mechanism before it dries. To avoid this, for example, heating the heat-sensitive paper on which the water-based ink has been applied at a high temperature is an option, however, heating at a high temperature could induce reaction between the leuco dye and the color developer, resulting in discoloration of the heat-sensitive paper. Further, for example, adding an organic solvent with a solubility parameter close to that of a polymer in the coat layer to the water-based ink is an option. By doing so, wettability of the ink against the coat layer of the heat-sensitive paper may be increased, and a surface area of the ink coming into contact with surrounding air may thus be increased. This is expected to promote the ink to dry. However, if the solubility parameter of the organic solvent added to the ink is close to that of the leuco dye in the heat-sensitive layer in addition to being close to the solubility parameter of the polymer in the coat layer, the leuco dye will dissolve in the organic solvent, and a problem of discoloration of the heat-sensitive paper may arise due to reaction between the color developer and leuco dye. The art disclosed herein provides a technique to suppress discoloration that can be caused by a heating temperature and by an organic solvent contained in ink even when water-based ink is employed to print an image on a heat-sensitive paper.
FIG. 1 shows a configuration of an image forming device 10.
FIG. 2 is a cross-sectional view of a heat-sensitive paper 2.

### (Configuration of Image Forming Device 10)

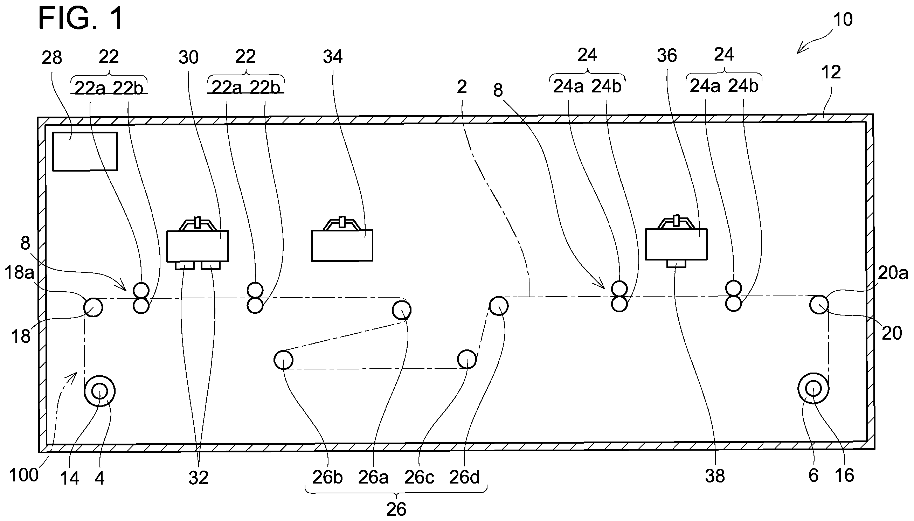

With reference to the drawings, an image forming device 10 according to an embodiment will be described. As shown in FIG. 1, the image forming device 10 is a device configured to form an image on a heat-sensitive paper 2. More specifically, the image forming device 10 ejects ink toward the heat-sensitive paper 2 to form an image (which may hereinafter be termed an "ink image") on the heat-sensitive paper 2 using an inkjet recording method. The image forming device 10 can also use a thermal method to selectively heat the heat-sensitive paper 2 on which an image has been recorded to further form an image (hereinafter sometimes described as a "heated image") on the heat-sensitive paper 2. The image forming device 10 is used by being placed on a floor or a rack. However, in other embodiments, the image forming device 10 may be used by being placed on a table.

As shown in FIG. 1, the image forming device 10 further comprises a housing 12, a first holder 14, a second holder 16, a first tensioner 18, a second tensioner 20, two pairs of first feed rollers 22, two pairs of second feeding rollers 24, a plurality of intermediate tensioners 26, and a controller 28. The controller 28 is connected to respective units of the image forming device 10 in a communicable manner and is configured to control operation of those units. For convenience of explanation, respective components housed inside the housing 12 are shown in FIG. 1, however those need not necessarily be located in the positions shown.

The first holder 14 supports the first roll 4 on which a heat-sensitive paper 2 is rolled. The heat-sensitive paper 2 is a long sheet of paper. The first holder 14 is rotated by a feed motor (not shown). The first roll 4 supported on the first holder 14 rotates with the rotation of the first holder 14.

The first tensioner 18 is located above the first holder 14. The first tensioner 18 includes an outer surface 18a configured to come into contact with the heat sensitive paper 2. The heat sensitive paper 2 is first drawn out from the first roll 4, curved along the outer surface 18a, and then sent out to a lateral side (especially rightward in FIG. 1).

The two pairs of first feed rollers 22 each comprise a first feed roller 22a and a first pinch roller 22b. Nips 8 are formed by the first feed rollers 22a contacting the first pinch rollers 22b. In an up-down direction, the nips 8 are located substantially at the same positions as an upper end of the outer surface 18a of the first tensioner 18. The two pairs of first feed rollers 22 are rotated by a feed motor (not shown). The two pairs of first feed rollers 22 are rotated while nipping the heat-sensitive paper 2 and thereby feed the heat-sensitive paper 2 sent from the first tensioner 18. The number and positions of the pairs of the first feed rollers 22 are not particularly limited.

The two pairs of second feed rollers 24 each comprise a second feed roller 24a and a second pinch roller 24b. Nips 8 are formed by the second feed rollers 24a contacting the second pinch rollers 24b. In the up-down direction, the nips 8 are located substantially at the same positions as an upper end of an outer surface 20a of the second tensioner 20. The two pairs of second feed rollers 24 are rotated by a feed motor (not shown). The two pairs of second feed rollers 24 are rotated while nipping the heat-sensitive paper 2 and thereby feed the heat-sensitive paper 2 toward the second tensioner 20. The number and positions of pairs of the second feed rollers 24 are not particularly limited.

The second tensioner 20 is located above the second holder 16. The second tensioner 20 has the outer surface 20a configured to come into contact with the heat-sensitive paper 2. The heat-sensitive paper 2 fed by the second feed roller pairs 24 is curved along the outer surface 20a and fed downward.

The second holder 16 supports a second roll 6. The second holder 16 is rotated by a feed motor (not shown). As the second holder 16 rotates, the second roll 6 supported by the second holder 16 rotates, and the heat-sensitive paper 2 on which an image is formed is wound into a roll shape.

A feed path 100 along which the heat-sensitive paper 2 is fed is formed between the first holder 14 and the second holder 16. Image(s) are recorded on the heat-sensitive paper 2 as it passes through this feed path 100.

In the feed path 100 as above, the plurality of intermediate tensioners 26 is arranged between the two pairs of first feed rollers 22 and the two pairs of second feed rollers 24. Specifically, from upstream to downstream of the feed path 100, a first intermediate tensioner 26a, a second intermediate tensioner 26b, a third intermediate tensioner 26c, and a fourth intermediate tensioner 26d are arranged in sequence. The four intermediate tensioners 26a to 26d constitute the feed path 100 that curves in front-back and up-down directions inside the housing 12.

As shown in FIG. 1, the image forming device 10 further comprises a head 30. The head 30 is located above the feed path 100.The head 30 comprises a plurality of nozzles 32, and ink supplied from ink tank(s) is ejected outward through each nozzle 32 when a piezo element (not shown) corresponding to each nozzle 32 is driven. As such, each of the 32 nozzles ejects ink onto the heat-sensitive paper 2 fed through the feed path 100 and forms an ink image on the heat-sensitive paper 2. The number and arrangement of the nozzles 32 are not particularly limited.

As shown in FIG. 1, the image forming device 10 further comprises a drying device 34. The drying device 34 is located downstream of the head 30. The drying device 34 is, for example, a dryer, heat gun, oven, or IR heater. The controller 28 controls the drying device 34 to dry the ink ejected onto the heat-sensitive paper 2 that is fed through the feed path 100. One type of drying device 34 may be used alone, or two or more types of drying devices 34 may be used together.

As shown in FIG. 1, the image forming device 10 further comprises a thermal head 36. The thermal head 36 is located above the feed path 100. The thermal head 36 is located downstream of the drying device 34. The thermal head 36 comprises a plurality of heating elements 38. The plurality of heating elements 38 is arranged along a direction perpendicular to the sheet surface of FIG. 1 on a lower surface of the thermal head 36. That is, the direction in which the plurality of heating elements 38 is aligned is orthogonal to a feed direction of the heat-sensitive paper 2 being fed under the thermal head 36. The controller 28 selectively causes the plurality of heating elements 38 to heat up so as to selectively heat the heat-sensitive paper 2 fed through the feed path 100, and thereby forms a heated image on the heat-sensitive paper 2.

### (Heat-Sensitive Paper)

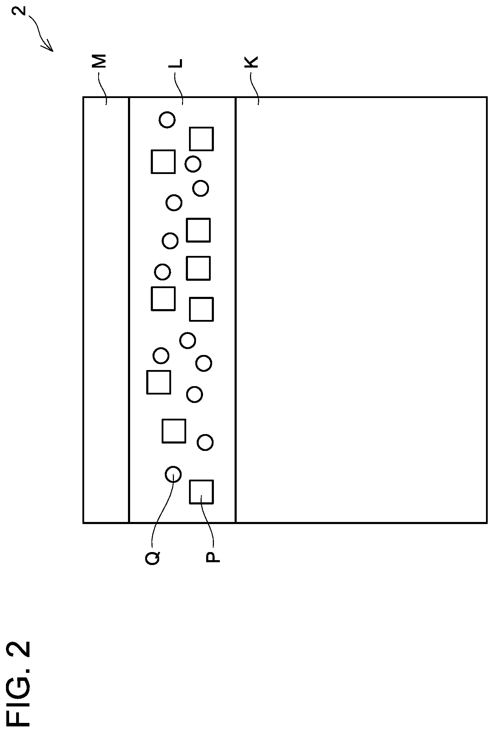

FIG. 2 schematically shows a cross-section of the heat-sensitive paper 2. As shown in FIG. 2, the heat-sensitive paper 2 comprises a base material K, a heat-sensitive layer L, and a coat layer M. The heat-sensitive layer L is placed on the base material K, and the coat layer M is placed on the heat-sensitive layer L. The heat-sensitive paper 2 may further comprise a primer coat layer (not shown) between the base material K and the heat-sensitive layer L to improve their adhesion, thermal insulation, and smoothness.

The base material K supports the heat-sensitive layer L. Since heat is applied to the heat-sensitive layer L during heated image formation, a material with mechanical strength that does not interfere with handling upon being heated is used as the base material K. Examples of the base material K includes, for example, papers, plastic films, etc. Examples of the papers include, for example, various types of papers, processed papers, synthetic papers, etc., and specifically the examples include, for example, fine paper, coated paper, art paper, cast-coated paper, paperboard, etc., as well as resin emulsion- or synthetic rubber latex-impregnated paper, synthetic resin-impregnated paper, etc. Examples of the plastic films include, for example, polyolefin film, rigid polyvinyl chloride film, polyester resin film, polystyrene film, polycarbonate film, polyacrylonitrile film, polymethacrylate film, etc. These plastic films may be transparent films as well as white opaque films that are formed by adding white pigment, fillers, etc. One of these types of base material K may be used alone, or two or more types of the base material K may be combined as a laminate.

The heat-sensitive layer L comprises a color developer P and leuco dye Q. The leuco dye Q reacts with the color developer P at a predetermined temperature. The heat-sensitive layer L may further contain a binder, a sensitizer, and a preservative agent. In addition to or instead of these, the heat-sensitive layer L may further comprise additives such as pigment, wax, defoamer, and/or filler for optional coloring of the heat-sensitive layer L.

As the leuco dye Q, a colorless or light-colored conventionally known leuco dye can suitably be selected and used. Examples of the leuco dye Q include, specifically, for example, (1) triarylmethane compounds such as: 3,3-bis(p-dimethylaminophenyl)-6-dimethylaminophthalide, 3-(p-dimethylaminophenyl)-3-(2-phenyl-3-indolyl)phthalide, 3-(p-dimethylaminophenyl)-3-(1,2-dimethyl-3-indolyl)phthalide, 3,3-bis(9-ethyl-3-carbazolyl)-5-dimethylaminophthalide, and 3,3-bis(2-phenyl-3-indolyl)-5-dimethylaminophthalide; (2) diphenylmethane compounds such as: 4,4-bis(dimethylamino)benzhydrin benzyl ether, and N-2,4,5-trichlorophenyl leucoauramine; (3) xanthene compounds such as: 3-dibutylamino-6-methyl-7-bromofluorane, rhodamine-β-anilinolactam, 3-(N-methyl-N-cyclohexylamino)-6-methyl-7-anilinofluorane, 3-diethylamino-7-octylaminofluorane, 3-diethylamino-7-(2-chloroanilino)fluorane, 3-diethylamino-6-methyl-7-anilinofluorane, 3-diethylamino-6-methyl-7-(2,4-dimethylanilino)fluorane, 3-diethylamino-7 dibenzylaminofluorane, 3-diethylamino-6-chloro-7-(β-ethoxyethylamino)fluorane, 3-diethylamino-6-chloro-7-(γ-chloropropylamino)fluorane, 3-(N-ethyl-N-isoamylamino)-6-methyl-7-anilinofluorane, 3-(N-ethyl-N-ethoxyethylamino)-6-methyl-7-anilinofluorane, 3-(N-ethyl-N-tetrahydrofurfurylamino)-6-methyl-7-anilinofluorane, 3-(N-ethyl-N-tolylamino)-6-methyl-7-anilinofluorane, 3-dibutylamino-6-methyl-7-anilinofluorane, 3-dibutylamino-7-(2-chloroanilino)fluorane, 3-dipentylamino-6-methyl-7-anilinofluorane, 3-piperidino-6-methyl-7-anilinofluorane, and 3-(4-anilino)anilino-6-methyl-7-chlorofluorane; (4) thiazine compounds such as: benzoyl leuco methylene blue, and p-nitrobenzoyl leuco methylene blue; (5) spiro compounds such as: 3-methylspirodinaphthopyran, 3-ethylspirodinaphthopyran, 3-benzylspirodinaphthopyran, and 3-methylnaphtho-(3-methoxybenzo)spiropyran; and (6) others, such as: 3,5',6-tris(dimethylamino)-spiro[9H-fluoren-9,1'(3'H)-isobenzofuran]-3'-one, 1,1-bis[2-(4-dimethylaminophenyl)-2-(4-methoxyphenyl) ethenyl]-4,5,6,7-tetrachloro(3H)isobenzofuran-3-one. As the leuco dye Q, only one type of leuco dye alone may be used, or two or more types of leuco dye may be used in combination.

The leuco dye Q has a solubility parameter (hereinafter referred to as "SP value") that is 8.0 or more and 9.0 or less. This SP value is calculated based on the Fedors method (Polymer Engineering and Science, 1974, Vol. 14, No. 2, P147-154). A unit of the SP value is (cal/cm³)^{0.5}. A lower limit of the SP value of leuco dye Q is not particularly limited, but may for example be 8.0 or more, 8.1 or more, 8.2 or more, 8.3 or more, or 8.4 or more. An upper limit of the SP value of the leuco dye Q is not particularly limited, but may for example be 9.0 or less, 8.95 or less, 8.9 or less, 8.85 or less, or 8.8 or less. A range of the SP value can be set by suitably combining the upper and lower limits mentioned above, and for example, may be 8.0 or more and 9.0 or less, 8.1 or more and 8.95 or less, 8.2 or more and 8.9 or less, 8.3 or more and 8.85 or less, or 8.4 or more and 8.8 or less. A content of the leuco dye Q is not particularly limited, but may for example be 10 weight % or more and 35 weight % or less to a total solid content of the heat-sensitive layer L.

Examples of the color developer P include, for example, phenol compounds such as: p-octylphenol, p- tertiary butylphenol , p-phenylphenol, p-hydroxyacetophenone, α-naphthol, β-naphthol, p-tertiary octyl catechol, 2,2'-dihydroxybiphenyl, bisphenol-A, 1,1-bis(p-hydroxyphenyl)butane, 2,2-bis(4-hydroxyphenyl)heptane, 2,2-bis-(3-methyl-4-hydroxyphenyl)propane, 2,2-bis(3,5-dimethyl-4 hydroxyphenyl)propane, 2,2-bis(3, 5-dichloro-4-hydroxyphenyl)propane, bis(4-hydroxyphenyl)sulfone, bis(3-allyl-4-hydroxyphenyl)sulfone, bis(3,4-dihydroxyphenyl) sulfone, 2,4'-dihydroxyphenyl sulfone, 1,1-bis(4-hydroxyphenyl)cyclohexane, bis(4-hydroxyphenyl)ether, bis[2-(4-hydroxyphenylthio)ethoxy]methane, 4-(4-isopropoxybenzenesulfonyl)phenol, dimethyl 4-hydroxyphthalate, butyl=2,2-bis(4-hydroxyphenyl) acetate, benzyl p-hydroxybenzoate, benzyl p-hydroxybenzoate, 3,5-Di-tert-butylsalicylic acid; organic carboxylic acids such as: benzoic acid; metals such as: zinc salicylic acid; and anilide derivatives such as: 2,4-dihydroxy-N-2'-methoxybenzanilide. As the color developer P, only one type of color developer alone may be used, or two or more types of color developer may be used in combination.

The heat-sensitive layer L can be formed, for example, by applying a coating solution, which is prepared by using water as its dispersant and mixing the color developer P and the leuco dye Q, as well as a binder, a sensitizer, and a preservative agent as needed, on the base material K using a known application method such as roll coating, bar coating, gravure coating, gravure reverse coating, die coating, slide coating, curtain coating, etc.

The coat layer M enhances glossiness and improves various durability properties such as heat resistance and plasticizer resistance. The coat layer M is sometimes called a protective layer because it prevents moisture, oil, organic solvents, etc. from adhering to the heat-sensitive layer L and causing the leuco dye Q and the color developer P to dissolve and develop colors. The coat layer M comprises a polymer (not shown). Examples of the polymer include, for example, acrylic resin, methacrylic resin, polypropylene (PP), polyethylene (PE), polystyrene, polyethylene terephthalate (PET), urethane, etc. One type of polymer may be used alone, or two or more types of polymer may be used in combination.

A lower limit of the SP value of the polymer may, for example, be 8.0 or more, 8.5 or more, or 9.0 or more. An upper limit of the SP value of the polymer may, for example, be 11.0 or less, 10.5 or less, or 10.0 or less. A range of the SP value can be set by suitably combining the upper and lower limits mentioned above, and for example, may be 8.0 or more and 11.0 or less, 8.5 or more and 10.5 or less, and 9.0 or more and 10.0 or less. The SP value of the polymer is a value calculated for the monomer being the constituent unit of the polymer.

### (Ink)

The ink comprises resin particles, a color material, an organic solvent, a surfactant, and a solvent (or a dispersion medium). The ink is an aqueous ink in which the resin particles, the color material, and the organic solvent are dissolved in the solvent or dispersed in the dispersion medium. However, the ink may not contain resin particles. In addition to or instead of this, the ink may not contain the color material.

For example, resin particles including at least one of methacrylic acid and acrylic acid as monomer can be used as the resin particles. For example, commercially available resin particles may be used as the resin particles. The resin particles may further include, for example, styrene, vinyl chloride, etc. as monomer. The resin particles may be included in, for example, an emulsion. For example, the emulsion is constituted of the resin particles and a dispersion medium (e.g., water, etc.). The resin particles are not dissolved in the dispersion medium but are dispersed in the dispersion medium while having particle diameters within a predetermined range. Examples of the resin particles include, for example, acrylic acid resins, maleate ester resins, vinyl acetate resins, carbonate resins, polycarbonate resins, styrene resins, ethylene resins, polyethylene resins, propylene resins, polypropylene resins, urethane resins, polyurethane resins, polyester resins, copolymer resins thereof, etc.

For example, a resin having a minimum film forming temperature (MFT) in a range of 0°C or more to100°C or less is used as the resin particles. The minimum film forming temperature (MFT) of the resin particle may, for example, be 20°C or more and 95°C or less, 40°C or more and 90°C or less, or 60°C or more and 85°C or less.

For example, commercially available emulsions may be used as the emulsion. Examples of the commercially available emulsions include, for example, "SUPERFLEX (registered trademark) 870" (MFT: 70°C) manufactured by DKS Co. Ltd.; "Hirose-X (registered trademark) KE-1062" (MFT:55°C), "Hirose-X(registered trademark) QE-1042" (MFT:45°C) manufactured by Seikou PMC Co., Ltd., etc.

The average particle diameter of the resin particles is, for example, in a range of 30 nm or more to 200 nm or less. The average particle diameter can be measured as an arithmetic mean diameter, for example, using a dynamic-light-scattering particle diameter distribution measuring device "LB-550" manufactured by HORIBA, Ltd.

A content of solid component of the resin particles to the total amount of the ink is, for example, in a range of 0.1 weight % or more to 30 weight % or less, in a range of 0.5 weight % or more to 20 weight % or less, or in a range of 1.0 weight % or more to 15 weight % or less. Only one type of resin particles may be used, or two or more types of resin particles may be used in combination.

Examples of the color material include, for example, resin-dispersed pigment and self-dispersing pigment. Resin-dispersed pigment refer to pigment in which a resin dispersant is adsorbed on pigment surface to endow the pigment with solvent dispersion stability. For example, common polymer dispersants (also called pigment dispersion resins or resin dispersants), etc. may be used as the resin dispersant, or such may be self-prepared. For example, a resin dispersant containing at least one of methacrylic acid and acrylic acid as a monomer may be used, for example, and this may be a commercial product. Examples of the resin dispersant may include, for example, a block copolymer, graft copolymer, or random copolymer consisting of two or more monomers selected from hydrophobic monomers such as styrene, styrene derivatives, vinylnaphthalene, vinylnaphthalene derivatives, aliphatic alcohol esters of α,β-ethylenically unsaturated carboxylic acids, or acrylic acid, acrylic acid derivatives, maleic acid, maleic acid derivatives, itaconic acid, itaconic acid derivatives, fumaric acid, fumaric acid derivatives, or salts thereof. The method of dispersing pigments using resins for pigment dispersion may for example be, to disperse the pigments using a dispersing device. The dispersing device used for dispersing pigments are not particularly limited as long as it is a general dispersing machine, and may for example be a ball mill, a roll mill, or a sand mill (e.g., high-speed type).

Self-dispersing pigment is a pigment that can be dispersed in water without the use of a dispersing agent, for example, by introducing at least one of hydrophilic functional groups such as carbonyl groups, hydroxyl groups, carboxylic acid groups, sulfonic acid groups, phosphoric acid groups, and their salts in the pigment particles directly or through chemical bonds with other groups. Examples of a raw material of the self-dispersing pigment include carbon black, inorganic pigments, organic pigments, etc. Examples of the inorganic pigments include, for example, titanium oxide, iron oxide inorganic pigments, and carbon black inorganic pigments, etc. Examples of the organic pigments include, for example, azo pigments, polycyclic pigments, dye lake pigments, nitro pigments, nitroso pigments, aniline black daylight fluorescent pigments, etc. The azo pigments include, for example, azo lakes, insoluble azo pigments, condensed azo pigments, chelated azo pigments. The polycyclic pigments include phthalocyanine pigments, perylene and pelrinone pigments, anthraquinone pigments, quinacridone pigments, dioxazine pigments, thioindigo pigments, isoindolinone pigments, and quinophthalone pigments. The dye lake pigments include, for example, basic dye-type lake pigments, acidic dye-type lake pigments, etc.

A content of solid component of the color material in the total amount of the ink is not particularly limited and may be appropriately determined, for example, depending on the desired optical density, saturation, or the like. The content of the color material solid component is, for example, in a range of 0.1 weight % or more to 20.0 weight % or less, in a range of 1.0 weight % or more to 15.0 weight % or less. The content of the color material solid component is the weight of the pigment only and does not include the weight of the resin particles. Only one type of color material may be used, or two or more types of color material may be used together.

A content of the solid components of the resin particles and the color material in the total amount of the ink is, for example, in a range of 0.2 weight % or more to 20 weight % or less, in a range of 1 weight % or more to 15 weight % or less, in a range of 3 weight % or more to 14 weight % or less, or in a range of 6 weight % or more to 13 weight % or less.

The organic solvent comprises a first organic solvent and a second organic solvent. The first organic solvent has an SP value of 12.0 or more and 20.0 or less. Any organic solvent can be used as the first organic solvent, without any particular limitation, as long as its SP value is in the range of 12.0 or more and 20.0 or less. A lower limit of the SP value of the first organic solvent is not particularly limited, but may, for example, be 12.0 or more, 13.0 or more, 14.0 or more, or 15.0 or more. An upper limit of the SP value of the first organic solvent is not particularly limited, but may, for example, be 20.0 or less, 19.0 or less, 18.0 or less, or 17.0 or less. A range of the SP value can be set by suitably combining the upper and lower limits mentioned above, and for example, may be 12.0 or more and 20.0 or less, 13.0 or more and 19.0 or less, 14.0 or more and 18.0 or less, or 15.0 or more and 17.0 or less. Examples of the first organic solvent include, for example, glycerin, 1,3-propanediol, propylene glycol, tripropylene glycol, dipropylene glycol, 1,2-hexanediol, diethylene glycol, triethylene glycol, polyethylene glycol 200, 1,2-butanediol, 1,3-butanediol, 1,2-pentanediol, etc. The second organic solvent has an SP value of 9.0 or more and 12.0 or less. Any organic solvent can be used as the second organic solvent, without any particular limitation, as long as its SP value is in the range of 9.0 or more and 12.0 or less. A lower limit of the SP value of the second organic solvent is not particularly limited, but may, for example, be 9.0 or more, 9.25 or more, 9.5 or more, 9.75 or more, or 10.0 or more. An upper limit of the SP value of the second organic solvent is not particularly limited, but may, for example, be 12.0 or less, 11.75 or less, 11.5 or less, 11.25 or less, or 11.0 or less. A range of the SP value can be set by suitably combining the upper and lower limits mentioned above, and for example, may be 9.0 or more and 12.0 or less, 9.25 or more and 11.75 or less, 9.5 or more and 11.5 or less, 9.75 or more and 11.25 or less, and 10.0 or more and 11.0 or less. Examples of the second organic solvent include, for example, 2-pyrrolidinone, triethylene glycol monomethyl ether, dipropylene glycol monomethyl ether, propylene glycol monopropyl ether, 1-butoxy-2-propanol, tripropylene glycol monomethyl ether, tripropylene glycol monobutyl ether, etc. Each of the first and second organic solvents may be configured by using the above type alone or using two or more types of solvents in combination.

The content of the first organic solvent to the total amount of the ink may, for example, be 20 weight % or less, 19 weight % or less, 18 weight % or less, 17 weight % or less, 16 weight % or less, or 15 weight % or less. The content of the second organic solvent to the total amount of the ink may, for example, be 10 weight % or less, 7 weight % or less, 5 weight % or less, 4 weight % or less, 3 weight % or less, or 2 weight % or less. From a perspective of reducing the solubility of the leuco dye Q in the organic solvent while ensuring the penetration of the ink into the coat layer M, it is preferred that the content of the second organic solvent is 5 weight % or less.

The content of the first organic solvent to the total amount of the ink simply needs to be higher than the content of the second organic solvent to the total amount of the ink. A sum of the content of the first organic solvent to the total amount of the ink and the content of the second organic solvent to the total amount of the ink may, for example, be less than 25 weight %, 24 weight % or less, 23 weight % or less, 22 weight % or less, 21 weight % or less, or 20 weight % or less.

A ratio of the content of the second organic solvent to the content of the first organic solvent may, for example, be 0.5 or less, 0.4 or less, 0.3 or less, 0.2 or less, 0.15 or less, 0.1 or less, or 0.05 or less. From the perspective of reducing the solubility of the leuco dye Q in the organic solvent and suppressing discoloration of the heat-sensitive paper 2, the aforementioned ratio is preferably 0.2 or less.

A lower limit of the weighted average of the SP value of the first organic solvent and the SP value of the second organic solvent may, for example, be 14.0 or more, 15.1 or more, or 15.6 or more. An upper limit of the weighted average of the SP value of the first organic solvent and the SP value of the second organic solvent may, for example, be 19.0 or less, or 18.8 or less. A range of the weighted average can be set by suitably combining the upper and lower limits mentioned above, and for example, may be 14.0 or more and 19.0 or less, 15.1 or more and 18.0 or less, or 15.6 or more and 17.0 or less. If the weighted average is within the above-mentioned range, the above-mentioned effect can suitably be obtained. From the perspective of reducing the solubility of the leuco dye Q in the organic solvent and suppressing the discoloration of the heat-sensitive paper 2, the aforementioned weighted average is preferably 15.1 or more. The weighted average of the SP values of the first organic solvent and the second organic solvent is a value obtained by dividing a sum of a product of the SP value of the first organic solvent and the content of the first organic solvent and a product of the SP value of the second organic solvent and the content of the second organic solvent by the sum of the content of the first organic solvent and the content of the second organic solvent.

A ratio of the content of the second organic solvent to the content of the resin particles may, for example, be 0.02 or more, 0.1 or more, 0.2 or more, 0.4 or more, 0.6 or more, 0.8 or more, or 1.0 or more. From a perspective of improving a rub resistance of ink images, it is preferable that the ratio is 0.4 or more.

Each of a vapor pressure of the first organic solvent and a vapor pressure of the second organic solvent is smaller than a vapor pressure of water. The vapor pressure of water at 20°C is about 20 mmHg. The vapor pressure of the first organic solvent and the vapor pressure of the second organic solvent at 20°C may be respectively, for example, 0.01 mmHg or more and 15 mmHg or less, 0.03 mmHg or more and 10 mmHg or less, or 0.05 mmHg or more and 5 mmHg or less. If the vapor pressure of each organic solvent is within the above range, evaporation occurring near the nozzles 32 can be suppressed in the image forming device 10, and the nozzles 32 can be suppressed from being clogged. However, as another embodiment, the vapor pressure of the first organic solvent and the vapor pressure of the second organic solvent may each be greater than or equal to the vapor pressure of water.

The water is preferably ion-exchange water or pure water. A content of the water to the total amount of the ink is, for example, in a range of 15 weight % or more to 95 weight % or less, or in a range of 25 weight % or more to 85 weight % or less. For example, the content of the water may be a balance of the other components.

The ink may further comprise a generally known additive, as needed. Examples of the additive include, for example, surfactants, pH adjusters, viscosity modifiers, surface-tension modifiers, preservatives, fungicides, leveling agents, antifoam agents, light stabilizers, antioxidants, nozzle anti-drying agents, polymer components such as emulsions, pigments, etc. The surfactants may further comprise cationic surfactants, anionic surfactants, or nonionic surfactants. For example, these surfactants may be commercially available surfactants. Examples of these commercially available surfactants include, for example, "OLFINE (registered trademark) E1010", "OLFINE (registered trademark) E1006", "OLFINE (registered trademark) E1004", "SILFACE SAG503A", and "SILFACE SAG002" manufactured by Nissin Chemical Industry Co., Ltd., and the like. A content of the surfactant to the total amount of the ink is, for example, 5 weight % or less, 3 weight % or less, or 0.1 weight % or more and 2 weight % or less. Examples of the viscosity modifiers include, for example, polyvinyl alcohols, celluloses, water-soluble resins, etc.

The ink can be prepared, for example, by homogeneously mixing the resin particles, the color material, the organic solvent, water, and optionally an additive together using a generally known method, and removing undissolved residue by a filter or the like.

### (Image Forming Method)

Next, an image forming method using the image forming device 10 will be described. The image forming method comprises a feed process, an applying process, a drying process, and a heating process.

### (Feeding Process)

The controller 28, for example, executes each process in response to an input of an external command to form an image on the image forming device 10. In the feeding process, the controller 28 feeds the heat-sensitive paper 2 on the feed path 100 by controlling related units such as the first feed roller pairs 22 and the second feed roller pairs 24.

### (Applying Process)

In the applying process, the controller 28 causes the ink to be applied to the surface of the heat-sensitive paper 2 (i.e., the coat layer M) that is being fed on the feed path 100. The controller 28 controls piezoelectric element (not shown) or the like corresponding to the multiple nozzles 32 to selectively eject the ink from the nozzle(s) 32 toward the heat-sensitive paper 2 as it moves below the head 30. As a result, an ink image is formed on the surface of the heat-sensitive paper 2.

### (Drying Process)

In the drying process, the controller 28 causes the heat-sensitive paper 2 with the ink applied thereon to be dried at a second temperature that is lower than a first temperature. The first temperature is a reaction temperature of the leuco dye Q with the color developer P, which in this embodiment is about 80°C. The second temperature is not particularly limited, but may for example be, about 60°C. The controller 28 controls the drying device 34 to dry the ink applied on the surface of the heat-sensitive paper 2 that is fed below the drying device 34. In this embodiment, a dryer or oven is used as the drying device 34. When a dryer is used as the drying device 34, the controller 28 blows a gas having the second temperature toward the surface of the heat-sensitive paper 2 (i.e., the surface on which the ink image is formed) to dry the ink.

In this image forming method, time from completion of the applying process to start of the drying process is 10 seconds or less. This can be achieved, for example, by adjusting a distance between the head 30 and the drying device 34 and/or by adjusting a feed speed of the heat-sensitive paper 2. If such interval time is 10 seconds or less, the ink is more easily dried before it penetrates to the heat-sensitive layer L, and discoloration of the heat-sensitive paper 2 can be effectively suppressed.

In general, when the heat-sensitive paper 2 on which ink is applied is heated to a temperature higher than the minimum film forming temperature (MFT) of the resin particles, the resin particles in the ink shift to a liquid or rubber state. When the temperature of the heat-sensitive paper 2 is then lowered to a temperature lower than the minimum film forming temperature, the resin particles that were in the liquid or rubber state solidify. As a result, a film is formed on the coat layer M of the heat-sensitive paper 2, and the rub resistance of the ink image formed on the heat-sensitive paper 2 is improved. When the resin particles are contained in the ink, mixing with the organic solvents and the like tends to lower the minimum film-forming temperature of the resin particles. For example, when an organic solvent having an SP value close to that of the resin particles is present at a certain amount or more (i.e., when the ratio of the content of the second organic solvent to the content of the resin particles is 0.4 or more), the resin particles are swollen by the action of the organic solvent and the distance between the resin particles decreases. Therefore, even at a temperature lower than the minimum film formation temperature of the resin particles, it becomes possible to form a film with the resin particles. Therefore, even when the second temperature is lower than the minimum film-forming temperature of the resin particles (e.g., 78°C), the rub resistance of the ink image formed on the heat-sensitive paper 2 can be improved.

### (Heating Process)

In the heating process, the controller 28 selectively heats the heat-sensitive paper 2 at the aforementioned first temperature or higher. The controller 28 selectively heats the heat-sensitive paper 2 passing below the thermal head 36 at the first temperature or higher by selectively causing the plurality of heating elements 38 to generate heat. This causes the leuco dye Q in the heat-sensitive layer L to react with the color developer P and develop a color, thereby further forming a heated image on the heat-sensitive paper 2.

The image forming method described above can be used, for example, to form an image of a label to be attached to a product. Information that does not change depending on manufacturing conditions (such as product name and/or manufacturer, etc.) is formed on the heat-sensitive paper 2 as an ink image using the inkjet recording method, while information that changes depending on the manufacturing conditions (e.g., lot number and/or manufacturing date, etc.) is formed as a heated image using the thermal method. By configuring as such, the information that does not change depending on the manufacturing conditions can be formed beforehand on the heat-sensitive paper 2 as an ink image, and the information that changes depending on the manufacturing conditions can be formed on the heat-sensitive paper 2 as a heated image.

According to the above configuration, the SP value of the second organic solvent contained in the ink has a value close to the SP value of the polymer contained in the coat layer M. Due to this, the ink applied to the coat layer M can easily penetrates into the coat layer M by the effect of the second organic solvent. As a result, the ink on the coat layer M can suitably be dried even when the heat-sensitive paper 2 is dried at a relatively low second temperature. This can suppress the discoloration of the medium due to the reaction between the color developer P and the leuco dye Q caused by the application of heat in the drying process.

On the other hand, the SP value of the second organic solvent also is at a value close to the SP value of the leuco dye Q. When these SP values are close, the leuco dye Q can dissolve in the ink. It is known that when the leuco dye Q dissolves in the ink, the color developer P and the leuco dye Q react and the heat-sensitive paper 2 becomes discolored. However, the above ink contains the first organic solvent having the SP value that is significantly different from the SP value of the leuco dye Q, and the content of the first organic solvent is greater than the content of the second organic solvent. Due to this, the leuco dye Q can be suppressed from dissolving in the ink by the effect of the first organic solvent. For this reason, it is also possible to suppress the discoloration of the heat-sensitive paper 2 due to the reaction between the color developer P and the leuco dye Q caused by the dissolution of the leuco dye Q in the ink.

### (Examples and Comparative Examples)

Next, the ink will be specifically described by using examples and comparative examples. However, the present disclosure may include but not limited to these examples.

### (Preparation of Ink)

Inks 1 to 25 were prepared by mixing each of ingredients shown in Tables 1 to 3, respectively. The numerical values in columns indicating each component in each table indicate the content of the component in the column to the total amount of ink, and the unit is % by weight. For resin particles and colorants, the content in terms of solid content is shown.

**Table 1**

| Category | Material Name | Ink1 | Ink2 | Ink3 | Ink4 | Ink5 | Ink6 | Ink7 | Ink8 |
|---|---|---|---|---|---|---|---|---|---|
| Water | Pure Water( SP value: 26.7 ) | Balance | Balance | Balance | Balance | Balance | Balance | Balance | Balance |
| First Organic Solvent | Glycerin ( SP value: 20.0 ) | - | - | - | - | - | - | - | - |
| | 1,3-Propanediol( SP value:16.1 ) | - | - | - | - | - | - | - | 20.0 |
| | Propylene Glycol( SP value: 15.9 ) | 20.0 | 19.0 | 15.0 | 15.0 | 20.0 | 20.0 | 20.0 | - |
| | 1,2-Hexanediol( SP value: 13.4 ) | - | - | - | - | - | - | - | - |
| | Tripropylene Glycol( SP value: 12.1 ) | - | - | - | 3.0 | - | - | - | - |
| Second Organic Solvent | 2-Pyrrolidinone ( SP value: 10.5 ) | 4.0 | - | - | - | - | - | - | - |
| | Triethylene Glycol Monobutyl Ether( SP value: 10.3 ) | - | 4.0 | 5.0 | 2.0 | 4.0 | 3.0 | - | - |
| | Dipropylene Glycol Monopropyl Ether( SP value: 10.1 ) | - | - | - | - | - | - | 3.0 | 3.0 |
| Preservative | Preservative | 0.2 | 0.2 | 0.2 | 0.2 | 0.2 | 0.2 | 0.2 | 0.2 |
| Surfactant | Silicone-Based Surfactant | 0.5 | 0.5 | 0.5 | - | 0.5 | 0.5 | 0.5 | 0.5 |
| | Alkyl Alkylene-Based Surfactant | - | - | - | 1.0 | - | - | - | - |
| Resin Particles | Acrylic Resin (MFT:78°C°C) | 5.0 | 5.0 | 5.0 | 5.0 | 5.0 | 5.0 | 5.0 | 5.0 |
| Color Material | Resin-Dispersed Pigment(Y) | 5.0 | 5.0 | 5.0 | 5.0 | 5.0 | 5.0 | 5.0 | 5.0 |
| | Self-Dispersed Pigment(BK) | - | - | - | - | - | - | - | - |
| Total | | 100 | 100 | 100 | 100 | 100 | 100 | 100 | 100 |

**Table 2**

| Category | Material Name | Ink9 | Ink10 | Ink11 | Ink12 | Ink13 | Ink14 | Ink15 | Ink16 |
|---|---|---|---|---|---|---|---|---|---|
| Water | Pure Water( SP value:26.7) | Balance | Balance | Balance | Balance | Balance | Balance | Balance | Balance |
| First Organic Solvent | Glycerin ( SP value: 20.0) | 20.0 | 20.0 | 20.0 | - | - | - | - | - |
| | 1,3-Propanediol( SPvalue:16.1) | - | - | - | 20.0 | - | - | - | - |
| | Propylene Glycol( SP value: 15.9) | - | - | - | - | 20.0 | 20.0 | 20.0 | 20.0 |
| | 1,2-Hexanediol( SP value: 13.4) | - | - | - | - | - | - | - | - |
| | Tripropylene Glycol( SP value: 12.1) | - | - | - | - | - | - | - | - |
| Second Organic Solvent | 2-Pyrrolidinone( SP value: 10.5) | 3.0 | - | - | - | - | - | - | - |
| | Triethylene Glycol Monobutyl Ether( SP value: 10.3) | - | 3.0 | - | - | 0.1 | 1.0 | 1.0 | 3.0 |
| | Dipropylene Glycol Monopropyl Ether( SPvalue:10.1) | - | - | 3.0 | 4.0 | - | - | - | - |
| Preservative | Preservative | 0.2 | 0.2 | 0.2 | 0.2 | 0.2 | 0.2 | 0.2 | 0.2 |
| Surfactant | Silicone-Based Surfactant | 0.5 | 0.5 | 0.5 | 0.5 | 0.5 | 0.5 | 0.5 | 0.5 |
| | Alkyl Alkylene-Based Surfactant | - | - | - | - | - | - | - | - |
| Resin Particles | Acrylic Resin (MFT:78°C°C) | 5.0 | 5.0 | 5.0 | 5.0 | 5.0 | 7.0 | 5.0 | 7.0 |
| Color Material | Resin-Dispersed Pigm ent(Y) | 5.0 | 5.0 | 5.0 | 5.0 | - | - | - | - |
| | Self-Dispersed Pigment(BK) | - | - | - | - | 5.0 | 5.0 | 5.0 | 5.0 |
| Total | | 100 | 100 | 100 | 100 | 100 | 100 | 100 | 100 |

**Table 3**

| Category | Material Name | Ink17 | Ink18 | Ink19 | Ink20 | Ink21 | Ink22 | Ink23 | Ink24 | Ink25 |
|---|---|---|---|---|---|---|---|---|---|---|
| Water | Pure Water( SP value: 26.7) | Balance | Balance | Balance | Balance | Balance | Balance | Balance | Balance | Balance |
| First Organic Solvent | Glycerin ( SP value: 20.0) | - | - | - | - | - | 30.0 | - | 20.0 | 5.0 |
| | 1,3-Propanediol( SP value: 16.1) | - | - | - | - | - | - | - | - | 5.0 |
| | Propylene Glycol( SP value: 15.9) | 20.0 | 20.0 | 20.0 | 20.0 | 20.0 | - | 20.0 | - | 10.0 |
| | 1,2-Hexanediol( SP value:13.4) | - | - | - | - | - | - | - | - | 3.0 |
| | Tripropylene Glycol( SP value:12.1) | - | - | - | - | - | - | - | - | - |
| Second Organic Solvent | 2-Pyrrolidinone( SP value:10.5) | - | - | 5.0 | - | - | - | - | - | - |
| | Triethylene Glycol Monobutyl Ether( SP value: 10.3) | 3.0 | 3.0 | - | - | 5.0 | - | 3.0 | - | 1.0 |
| | Dipropylene Glycol Monopropyl Ether( SP value: 10.1) | - | - | - | 5.0 | - | 3.0 | - | 10.0 | - |
| Preservative | Preservative | 0.2 | 0.2 | 0.2 | 0.2 | 0.2 | 0.2 | 0.2 | 0.2 | 0.2 |
| Surfactant | Silicone-Based Surfactant | 0.5 | 0.5 | 0.5 | 0.5 | 0.5 | 0.5 | 0.5 | 0.5 | - |
| | Alkyl Alkylene-Based Surfactant | - | - | - | - | - | - | - | - | 1.0 |
| Resin Particles | Acrylic Resin (MFT:78°C°C) | 5.0 | - | 5.0 | 5.0 | - | 5.0 | 3.0 | 5.0 | 5.0 |
| Color Material | Resin-Dispersed Pigm ent(Y) | - | - | 5.0 | 5.0 | - | 5.0 | - | 5.0 | 5.0 |
| | Self-Dispersed Pigm ent(BK) | 5.0 | - | - | - | - | - | 5.0 | - | - |
| Total | | 100 | 100 | 100 | 100 | 100 | 100 | 100 | 100 | 100 |

Using each of the prepared inks, an ink stain resistance, degree of discoloration of the heat-sensitive paper 2, and a rub resistance of an ink image forming area were evaluated according to a method shown below. In the following evaluation, a thermal synthetic paper manufactured by LINTEC Co. was used as the heat-sensitive paper 2. The reaction temperature between the leuco dye Q in the heat-sensitive layer L of the heat-sensitive paper and the color developer P was about 80°C.

### (Ink Stain Test)

Each ink was applied to the coat layer M of the heat-sensitive paper 2, and then the heat-sensitive paper 2 with the ink applied thereon was dried under conditions (drying temperature, drying method, and time from completion of the applying process to start of the drying process) in each case shown in Tables 4 to 6 to produce each sample. The ink-applied surfaces of these samples were brought into contact with plain paper, and the ink stain resistance was evaluated according to the following criteria. Evaluation results are shown in Tables 4 to 6.
○: No ink applied to plain paper
×: Ink applied to plain paper

### (Discoloration Test)

Each ink was adhered to the coat layer M of the heat-sensitive paper 2, and then heat-sensitive paper 2 with the ink applied thereon was dried under the conditions (drying temperature, drying method, and time from completion of the applying process to start of the drying process) in each case shown in Tables 4 to 6 to produce each sample. L*a*b* values of the image forming surfaces of these samples were measured using a spectrophotometer (eXact manufactured by X-Rite, (light source: D50, viewing angle: 2°, Status T, illumination condition during measurement: M0 (no filter), backing: PANTONE white backing, geometric lighting and light receiving condition: 45/0)), and color difference ΔE00 of CIEDE2000 was calculated according to JIS Z8781-6:2017 and evaluated according to the following criteria. For samples in which the ink does not contain color materials (Comparative Examples 1 and 4), ΔE00 was calculated based on the L*a*b* values of the heat-sensitive paper 2, and for samples in which the ink contains color materials, ΔE00 was calculated based on the L*a*b* values of images formed using the ink which does not contain the first and second organic solvents. The evaluation results are shown in Tables 4 to 6.
A+: ΔE00 is less than 1.0
A : ΔE00 is 1.0 or more and less than 2.0
B+: ΔE00 is 2.0 or more and less than 2.5
B : ΔE00 is 2.5 or more and less than 4.5
B-: ΔE00 is 4.5 or more and less than 5.0
C : ΔE00 is 5.0 or more

### (Rub Resistance Test)

Each ink was applied to the coat layer M of the heat-sensitive paper 2, and then the heat-sensitive paper 2 with the ink applied thereon was dried under conditions (drying temperature, drying method, and time from completion of the applying process to start of the drying process) in each case shown in Tables 4 to 6 to produce each sample. Optical density (OD) values of these samples were measured by a spectrophotometer (eXact manufactured by X-Rite (light source: D50, viewing angle: 2°, Status T)). Then, these samples were rubbed 10 times on the image forming area with a probe of an academic vibration type friction fastness tester (AB-301 manufactured by Tester Sangyo Co., Ltd.) with a weight of 200g applied thereon. The OD value of each sample after rubbing was measured with the spectrophotometer, and the rub-fastness of the image forming area was evaluated according to the following criteria. The evaluation results are shown in Tables 4 to 6.
A: The absolute value of the difference in OD values before and after rubbing is less than 0.1
B: The absolute value of the difference in OD values before and after rubbing is 0.1 or more and less than 0.5
C: The absolute value of the difference in OD values before and after rubbing is 0.5 or more

**Table 4**

| | | Example1 | Example2 | Example3 | Example4 | Example5 | Example6 | Example7 | Example8 | Example9 | Example10 | Example11 |
|---|---|---|---|---|---|---|---|---|---|---|---|---|
| Ink | | 1 | 1 | 2 | 3 | 4 | 5 | 6 | 7 | 8 | 9 | 10 |
| First Organic Solvent+ Second Organic Solvent | | 24.0 | 24.0 | 23.0 | 20.0 | 20.0 | 24.0 | 23.0 | 23.0 | 23.0 | 23.0 | 23.0 |
| Second Organic Solvent/ First Organic Solvent | | 0.20 | 0.20 | 0.21 | 0.33 | 0.11 | 0.20 | 0.15 | 0.15 | 0.15 | 0.15 | 0.15 |
| Weighted Average of SP Value of First Organic Solvent and SP Value of Second Organic Solvent | | 15.0 | 15.0 | 14.9 | 14.5 | 14.8 | 15.0 | 15.2 | 15.2 | 15.3 | 18.8 | 18.8 |
| Second Organic Solvent/ Resin Particles | | 0.8 | 0.8 | 0.8 | 1.0 | 0.4 | 0.8 | 0.6 | 0.6 | 0.6 | 0.6 | 0.6 |
| Drying Temperature [°C] | | 60 | 60 | 60 | 60 | 60 | 60 | 60 | 60 | 60 | 60 | 60 |
| Drying Method | | Warm-Air | Warm-Air | Warm-Air | Warm-Air | Warm -Air | Warm-Air | Warm-Air | Warm -Air | Warm -Air | Warm -Air | Warm -Air |
| Time from Finishing Com pletion of Applying Process to Beginning Start of Drying Process [Seconds] | | 20 | 10 | 10 | 10 | 10 | 10 | 10 | 10 | 10 | 10 | 10 |
| Results | Ink Stain | ○ | ○ | ○ | ○ | ○ | ○ | ○ | ○ | ○ | ○ | ○ |
| | Discoloration | B- | B | B | B | B+ | B+ | A | A | A | A+ | A+ |
| | | 4.90 | 4.43 | 3.34 | 2.85 | 2.16 | 2.09 | 1.58 | 1.55 | 1.30 | 0.68 | 0.53 |
| | Rub Resistance | - | - | - | - | - | - | - | - | - | - | - |
| | | - | - | - | - | - | - | - | - | - | - | - |

**Table 5**

| | | Example12 | Example13 | Example14 | Example15 | Example16 | Example17 | Example18 | Example19 | Example20 | Example21 | Example22 |
|---|---|---|---|---|---|---|---|---|---|---|---|---|
| Ink | | 11 | 12 | 1 | 8 | 7 | 13 | 14 | 15 | 16 | 17 | 17 |
| First Organic Solvent+ Second Organic Solvent | | 23.0 | 24.0 | 24.0 | 23.0 | 23.0 | 20.1 | 21.0 | 21.0 | 23.0 | 23.0 | 23.0 |
| Second Organic Solvent/ First Organic Solvent | | 0.15 | 0.20 | 0.20 | 0.15 | 0.15 | 0.01 | 0.05 | 0.05 | 0.15 | 0.15 | 0.15 |
| Weighted Average of SP Value of First Organic Solvent and SP Value of Second Organic Solvent | | 18.7 | 15.1 | 15.0 | 15.3 | 15.2 | 15.9 | 15.6 | 15.6 | 15.2 | 15.2 | 15.2 |
| Second Organic Solvent/ Resin Particles | | 0.6 | 0.8 | 0.8 | 0.6 | 0.6 | 0.02 | 0.1 | 0.2 | 0.4 | 0.6 | 0.6 |
| Drying Temperature [°C] | | 60 | 60 | 60 | 60 | 60 | 60 | 60 | 60 | 60 | 60 | 60 |
| Drying Method | | Warm -Air | Warm -Air | Warm-Air | Warm-Air | Warm-Air | Warm -Air | Warm -Air | Warm-Air | Warm -Air | Warm -Air | Oven |
| Time from Finishing Com pletion of Applying Process to Beginning Start of Drying Process [Seconds] | | 10 | 10 | 5 | 5 | 5 | 10 | 10 | 10 | 10 | 10 | 10 |
| Results | Ink Stain | ○ | ○ | ○ | ○ | ○ | ○ | ○ | ○ | ○ | ○ | ○ |
| | Discoloration | A+ | A+ | B+ | A+ | A+ | - | - | - | - | - | - |
| | | 0.78 | 0.90 | 2.47 | 0.44 | 0.82 | - | - | - | - | - | - |
| | Rub Resistance | - | - | - | - | - | C | C | C | A | A | C |
| | | - | - | - | - | - | 0.79 | 0.88 | 0.74 | 0.08 | 0.02 | 0.65 |

**Table 6**

| | | Example23 | Example24 | Example25 | Example26 | Example27 | Example28 | Com parative Example1 | Comparative Example2 | Com parative Example3 | Com parative Example4 | Com parative Example5 | Comparative Example6 |
|---|---|---|---|---|---|---|---|---|---|---|---|---|---|
| Ink | | 17 | 17 | 17 | 17 | 23 | 25 | 18 | 19 | 20 | 21 | 22 | 24 |
| First Organic Solvent+ Second Organic Solvent | | 23.0 | 23.0 | 23.0 | 23.0 | 23.0 | 24.0 | 23.0 | 25.0 | 25.0 | 25.0 | 33.0 | 30.0 |
| Second Organic Solvent/ First Organic Solvent | | 0.15 | 0.15 | 0.15 | 0.15 | 0.15 | 0.04 | 0.15 | 0.25 | 0.25 | 0.25 | 0.10 | 0.50 |
| Weighted Average of SP Value of First Organic Solvent and SP Value of Second Organic Solvent | | 15.2 | 15.2 | 15.2 | 15.2 | 15.2 | 16.3 | 15.2 | 14.8 | 14.8 | 14.8 | 19.1 | 16.7 |
| Second Organic Solvent/ Resin Particles | | 0.6 | 0.6 | 0.6 | 0.6 | 1.0 | 0.2 | N.A. | 1.0 | 1.0 | N.A. | 0.6 | 2.0 |
| Drying Temperature [°C] | | 30 | 30 | 40 | 50 | 60 | 60 | 100 | 60 | 60 | 60 | 60 | 60 |
| Drying Method | | Warm -Air | Oven | Warm-Air | Warm -Air | Warm -Air | Warm-Air | Warm-Air | Warm -Air | Warm -Air | Warm -Air | Warm-Air | Warm -Air |
| Time from Finishing Completion of Applying Process to Beginning Start of Drying Process [Seconds] | | 10 | 10 | 10 | 10 | 10 | 10 | 10 | 10 | 10 | 10 | 10 | 10 |
| Results | Ink Stain | ○ | ○ | ○ | ○ | ○ | ○ | ○ | ○ | ○ | ○ | × | × |
| | Discoloration | - | - | - | - | - | A | C | C | C | C | A+ | C |
| | | - | - | - | - | | 1.63 | 10.0 | 5.21 | 5.30 | 5.41 | 0.46 | 21.3 |
| | Rub Resistance | C | C | B | A | A | - | - | - | - | - | - | - |
| | | 0.65 | 0.70 | 0.13 | 0.06 | 0.09 | - | - | - | - | - | - | - |

### (Ink Stain Results)

As shown in Tables 4 to 6, it was confirmed that ink stain resistance was excellent in Examples 1 to 28. On the other hand, in Comparative Examples 5 and 6, it was confirmed that the ink stain resistance was inferior. Ink 22 used in Comparative Example 5 changed only a glycerin content to 30 weight % as compared to the ink 11 used in Example 12. That is, it was confirmed that the ink containing a large amount of the first organic solvent having a relatively large SP value had inferior ink stain resistance. In Comparative Example 5, which contains a large amount of the first organic solvent, the total content of the organic solvent is as large as 33 weight %, and the weighted average of the SP values of the first organic solvent and the second organic solvent (i.e., corresponding to the SP value of the entire organic solvent) is large at 19.1. That is, the weighted average deviates from the SP value of the polymer contained in the coat layer M. Therefore, in Comparative Example 5, wettability of the ink to the coat layer M is low and it is difficult for the ink to penetrate into the coat layer M. In addition, the ink 22 in Comparative Example 5 contains a large amount of glycerin with a relatively low vapor pressure, and an evaporation speed of glycerin into the atmosphere is slow. These are considered to be reasons why, in Comparative Example 5 the ink applied to the coat layer M did not dry quickly and the ink stain resistance was inferior. In Comparative Example 6 as well, the weighted average is also relatively large at 16.7, which deviates from the SP value of the polymer contained in the coat layer M, which is considered to be why it was difficult for the ink to penetrate into the coat layer M and the ink applied on the coat layer M could not dry quickly and the ink stain resistance became inferior. In contrast, in Examples 1 to 28, it can be inferred that since the organic solvent is contained at suitable levels and the above weighted average is within the appropriate range, the ink could easily penetrate into the coat layer M, and the ink on the coat layer M could be dried suitably even at a relatively low drying temperature, as a result of which the ink stain resistance was excellent.

### (Discoloration Results)

Smaller ΔE00 of the evaluated sample can be said as indicating that the degree of discoloration of the heat-sensitive paper 2 is smaller, i.e., the reaction between the leuco dye Q and the color developer P is suppressed. On the other hand, larger ΔE00 of the evaluated sample can be said as indicating that the degree of discoloration of the heat-sensitive paper 2 is more severe, i.e., the reaction between the leuco dye Q and the color developer P has progressed. As shown in Tables 4 to 6, in Examples 1 to 28 in which the drying temperature is lower than the reaction temperature between the leuco dye Q and the color developer P (i.e., about 80° C.), it was found that the aforementioned ink stain resistance was excellent and the reaction between the leuco dye Q and the color developer P was suppressed. In contrast, in Comparative Example 1 in which the drying temperature is higher than the reaction temperature of the leuco dye Q and the color developer P (i.e., about 80° C.), although the aforementioned ink stain resistance was excellent, the reaction between the leuco dye Q and the color developer P has progressed, resulting in significant discoloration of the heat-sensitive paper 2. Thus, it was found that even at a lower drying temperature than the reaction temperature between the leuco dye Q and the color developer P (i.e., about 80°C), the ink on the heat-sensitive paper 2 can be dried and the discoloration of the heat-sensitive paper 2 can be suppressed.

Further, in Examples 1 to 28 in which the sum of the content of the first organic solvent and the content of the second organic solvent is less than 25 weight %, it was confirmed that the discoloration of the heat-sensitive paper 2 is suppressed. On the other hand, in Comparative Examples 2 to 4 and 6 in which the sum is 25 weight % or more, the discoloration of the heat-sensitive paper 2 occurred. In Comparative Examples 2 to 4 and 6 in which the amount of the organic solvent contained in the ink is high, the amount of the organic solvent that penetrates into the heat-sensitive layer L is large. In these cases, when the amount of the second organic solvent is large, the leuco dye Q is easily dissolved in the ink by the effect of the second organic solvent that penetrates the heat-sensitive layer L. As such, in Comparative Examples 2 to 4 and 6 in which both the content of the organic solvent in the ink and the amount of the second organic solvent are large, it can be inferred that the leuco dye Q dissolved into the ink by the effect of the second organic solvent, and the reaction between the leuco dye Q and the color developer P was promoted.

In Examples 1, 2, and 14, only the interval time from the ink application to the start of the drying (hereinafter referred to as "drying transition time") was changed for the same ink 1. Comparing Examples 1, 2, and 14, a shorter drying transition time resulted in a greater suppression on the discoloration of the heat-sensitive paper 2. Similar results were also obtained when comparing Examples 8 and 16, in which only the drying transition time was changed for the same ink 7, and Examples 9 and 15, in which only the drying transition time was changed for the same ink 8. By shortening the drying transition time, the time for the ink applied to the coat layer M to penetrate into the heat-sensitive layer L becomes shorter. As such, drying of the ink starts before the leuco dye Q in the coat layer M is dissolved in the ink (second organic solvent). Thus, in the examples in which the drying transition time is shorter, it can be inferred that the reaction between the leuco dye Q and the color developer P caused by the dissolution of the leuco dye Q into the ink was more suppressed.

It was found that in Examples 1, 2, and 5 to 28 in which the ratio of the content of the second organic solvent to that of the first organic solvent is 0.2 or less, the discoloration of the heat-sensitive paper 2 was suppressed at a greater degree. It can be inferred that the relatively large content of the first organic solvent to the second organic solvent effectively enhanced the effect of the first organic solvent contained in the ink that penetrated into the heat-sensitive layer L to suppress the dissolution of the leuco dye Q into the ink, by which the reaction of the leuco dye Q with the color developer P was suppressed.

Further, it was also found that in Examples 7 to 13 and 15 to 28 in which the weighted average of the SP value of the first organic solvent and the SP value of the second organic solvent is 15.1 or more, the discoloration of the heat-sensitive paper 2 was suppressed at a greater degree. It can be inferred that the weighted average of the relatively large SP value of the first organic solvent and the relatively small SP value of the second organic solvent had a moderately large value, which facilitated the penetration of the ink into the coat layer M of the heat-sensitive paper 2 by the effect of the second organic solvent, while the leuco dye Q was suppressed from dissolving in the liquid by the effect of the first organic solvent.

For Examples 17 to 27, since ink containing BK (carbon black) was used as the color material, no evaluation of discoloration was conducted.

### (Rub Resistance Results)

A smaller absolute value of the difference in OD values before and after the rubbing of the evaluation sample can be said as indicating that the rub resistance of the image recorded on the heat-sensitive paper 2 is higher. On the other hand, a larger absolute value of the difference in OD values before and after rubbing of the evaluation sample can be said as indicating that the rub resistance of the image recorded on the heat-sensitive paper 2 is lower. As shown in Tables 4 to 6, Examples 20, 21, and 27 in which the ratio of the content of the second organic solvent to the content of the resin particles is 0.4 or more, had a better rub resistance than Examples 17 to 19 in which the ratio is less than 0.4. Since the SP value of the second organic solvent has a value relatively close to the SP value of the resin particles (acrylic resin) contained in the ink, the resin particles are swollen by the effect of the second organic solvent. Therefore, in Examples 20, 21, and 27 in which the above ratio is 0.4 or more, compared to Examples 17 to 19 in which the above ratio is less than 0.4, it can be inferred that the resin particles swell more easily and the distance between the resin particles becomes smaller, which have promoted the film formation by the resin particles and improved the rub resistance of the ink image.

Further, Example 21, in which the drying method is warm-air drying, showed a superior rub resistance as compared to Example 22, in which only the drying method is changed to an oven. Comparing Example 23, in which the drying method is warm-air drying, with Example 24, in which only the drying method is changed to an oven, the result was that the drying method using warm air drying was superior in terms of rub resistance. This is considered to be because the ink was dried in a shorter time with warm air drying compared to drying in an oven.

Examples 21, 23, 25, and 26 were of the same ink 17, but with different drying temperatures. In comparing these examples, a higher drying temperature resulted in a better rub resistance. In particular, it was found that the higher the drying temperature, the better the rub resistance, especially when the drying temperature is closer to the minimum film formation temperature (78°C) of the acrylic resin, which is the resin particles contained in the ink 17. The minimum film-forming temperature of the acrylic resin was measured using a minimum film-forming thermometer (MFFTB-90 manufactured by RHOPOINT INSTRUMENTS).

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below:

### (Modification 1)

In the above embodiment, the interval time from completion of the applying process to start of the drying process may not be 10 seconds or less.

### (Modification 2)

In the above embodiment, the drying process may, for example, heat the gas to the second temperature (e.g., oven drying) instead of blowing the gas having the second temperature (i.e., warm-air drying).

### (Modification 3)

In the embodiments described above, the second temperature may be less than a temperature obtained by subtracting 30 °C from the minimum film-forming temperature of the resin particles.

### (Modification 4)

In the embodiments described above, the image forming device 10 may not comprise the thermal head 36. That is, the image forming method may not comprise the heating process of selectively heating the medium at the first temperature or higher after the drying process. Alternatively, the thermal head 36 may be provided in a separate image forming device. That is, after an ink image is formed on the heat-sensitive paper 2 in the image forming device 10, a heated image may be further formed on the heat-sensitive paper 2 on which the ink image was formed in another image forming device. In this case, after the heat-sensitive paper 2 on which the ink image is formed on the heat-sensitive paper 2 in the image forming device 10 is attached to a product, a heated image may be further formed on the heat-sensitive paper 2 attached to the product in another image forming device.

## Claims

1. An image forming method comprising:
a feeding process of feed a medium (2) comprising a heat-sensitive layer (L) and a coat layer (M) on the heat-sensitive layer (L), wherein the heat-sensitive layer (L) comprises a color developer (P) and a leuco dye (Q) configured to react with the color developer (P) at a first temperature, and the coat layer (M) comprises a polymer;
an applying process of applying a liquid onto the coat layer of the medium being fed, wherein the liquid comprises a first organic solvent and a second organic solvent; and
a drying process of drying the medium with the liquid applied thereon at a second temperature which is lower than the first temperature,
wherein a solubility parameter of the leuco dye is 8.0 or more and 9.0 or less,
a solubility parameter of the polymer is 11.0 or less,
a solubility parameter of the first organic solvent is 12.0 or more and 20.0 or less,
a solubility parameter of the second organic solvent is 9.0 or more and less than 12.0,
a content of the first organic solvent to a total amount of the liquid is higher than a content of the second organic solvent to the total amount of the liquid, and
a sum of the content of the first organic solvent to the total amount of the liquid and the content of the second organic solvent to the total amount of the liquid is less than 25 weight %.

2. The image forming method according to claim 1, wherein time from completion of the applying process to start of the drying process is 10 seconds or less.

3. The image forming method according to claim 1 or 2, wherein a ratio of the content of the second organic solvent to the content of the first organic solvent is 0.2 or less.

4. The image forming method according to any one of claims 1 to 3, wherein a weighted average of the solubility parameter of the first organic solvent and the solubility parameter of the second organic solvent is 15.1 or more.

5. The image forming method according to any one of claims 1 to 4, wherein the liquid further comprises resin particles.

6. The image forming method according to any one of claims 1 to 5, wherein the liquid further comprises a color material.

7. The image forming method according to any one of claims 1 to 6, wherein a ratio of the content of the second organic solvent to a content of the resin particles is 0.4 or more.

8. The image forming method according to any one of claims 1 to 7, wherein the drying process comprises feeding a gas having the second temperature.

9. The image forming method according to any one of claims 1 to 8, wherein the second temperature is more than or equal to a temperature obtained by subtracting 30 °C from a minimum film forming temperature of the resin particles.

10. The image forming method according to any one of claims 1 to 9, further comprising a heating process of selectively heating the medium at the first temperature or higher after the drying process.

11. The image forming method according to any one of claims 1 to 10, wherein each of a vapor pressure of the first organic solvent and a vapor pressure of the second organic solvent is smaller than a vapor pressure of water.

12. A liquid for use in forming an image on a medium (2), wherein the medium (2) comprises a heat-sensitive layer (L) and a coat layer (M) on the heat-sensitive layer (L),
the heat-sensitive layer (L) comprises a color developer (P) and a leuco dye (Q) configured to react with the color developer (P) at a first temperature, and
the coat layer (M) comprises a polymer,
the liquid comprises a first organic solvent and a second organic solvent,
wherein a solubility parameter of the leuco dye is 8.0 or more and 9.0 or less,
a solubility parameter of the polymer is 11.0 or less,
a solubility parameter of the first organic solvent is 12.0 or more and 20.0 or less,
a solubility parameter of the second organic solvent is 9.0 or more and less than 12.0,
a content of the first organic solvent to a total amount of the liquid is higher than a content of the second organic solvent to the total amount of the liquid, and
a sum of the content of the first organic solvent to the total amount of the liquid and the content of the second organic solvent to the total amount of the liquid is less than 25 weight %.
